# EUROPEAN PATENT APPLICATION

(11) **EP 1 209 559 A1**
(43) Date of publication of application: **29.05.2002**
(21) Application number: 00919128.9
(22) Date of filing: 17.04.2000
(51) Int. Cl.: G06F 9/34, G06F 9/38

(54) **COMPUTER SYSTEM**

(30) Priority: 22.04.1999 JP 11504799
(71) Applicant: Seki, Hajime, Matsuyama-shi, Ehime 790-0848 (JP)
(72) Inventor: Seki, Hajime, Matsuyama-shi, Ehime 790-0848 (JP)
(74) Representative: Sajda, Wolf E., Dipl.-Phys.
(86) International application number: JP0002512
(87) International publication number: WO0065435

(57) **Abstract**

A computer system for executing at high speed programs described in a machine language based on the stack architecture, comprising a data cache, a data buffer, a consolidated register file each entry of which is designed to hold data, an advanced pointer stack and a completed pointer stack each entry of which is designed to hold an entry address in the consolidated register file, an instruction buffer having the construction of a FIFO queue each entry of which is designed to hold substance of an instruction, and functional units including an arithmetic/logic unit and a load/store unit that can access the data cache and the data buffer.

Each time an instruction is decoded, the advanced pointer stack and the consolidated register file are manipulated in accordance with the instruction, and substance of the instruction is written into the instruction buffer, and if necessary, into a free reservation station of an appropriate functional unit. Unexecuted instructions held in the instruction buffer are to be executed out of order.

When the instruction held in the head entry of the instruction buffer is/becomes ready to be completed, in accordance with the substance in the head entry of the instruction buffer, the completed pointer stack is manipulated so as to reproduce the operation that was applied on the advanced pointer stack in the course of decoding of the held instruction, and the head entry is dequeued.

## Description

### FIELD OF THE INVENTION

The present invention relates to a computer system of a novel construction that efficiently executes programs described in a machine language based on the stack architecture.

### DESCRIPTION OF THE PRIOR ART

So far, stack machines basically execute instructions in order. Namely, in the context of stack machines, as each of arithmetic/logic instructions means popping source data from the operand stack, operating on them and pushing the result onto the operand stack, instructions comprising a program are executed one after another.

These traditional stack machines have the advantage of simple control structure, as instructions are executed in order. These machines, however, have suffered from a problem that their performance is restricted.

Then, computer systems that execute programs described in a machine language based on the stack architecture in an out-of-order manner were devised. E.g. JP 2-260082, US 5522051 and processor elements described in US 5333320 / US 5765014. Processors shown in these specifications have suffered from a problem that improvement in performance is insufficient, and that in securing precise handling of exceptions.

The present invention is proposed with a view to solving the foregoing problems. Its object is to provide a computer system that, securing precise handling of exceptions, executes programs described in a machine language based on the stack architecture more efficiently in an out-of-order manner.

### SUMMARY OF THE INVENTION

The computer system according to the present invention comprises a data cache, a data buffer, a consolidated register file each entry of which is designed to hold data, an advanced pointer stack and a completed pointer stack each entry of which is designed to hold an entry address in the consolidated register file, an instruction buffer having the construction of a FIFO queue each entry of which is designed to hold substance of an instruction, functional units including an arithmetic/logic unit that is designed to execute arithmetic/logic operations and a load/store unit that can access the data buffer and the data cache, and a common data bus through which data and their respective entry addresses in the consolidated register file are to be distributed among the consolidated register file and the functional units. Each of above-mentioned functional units is equipped with an appropriate number of reservation stations.

Stack state such as { ....., word1, word2, word3, word4 } (the right end is the top of the stack) in a traditional stack machine corresponds to state in which state of pointer stack is such as { ....., <a>, <b>, <c>, <d> } (the right end is the top of the stack), and in which word1, word2, word3 and word4 are respectively held in the entries of the consolidated register file whose addresses are <a>, <b>, <c> and <d>, in the computer system according to the present invention.

In the computer system of the present invention, each time an instruction is decoded, the advanced pointer stack and the consolidated register file are manipulated in accordance with the instruction, and substance of the instruction is written into the instruction buffer, and if necessary, into a free reservation station of an appropriate functional unit. At this juncture, the same kind of stack operation as that to be applied originally on the operand stack prescribed by the instruction is applied on the advanced pointer stack. Here, in emulating a push operation of a word of data onto the operand stack, the computer system of the present invention allocates a free entry of the consolidated register file to hold the data, and pushes the address of this entry onto the advanced pointer stack.

Namely, in the case that a pop operation from the operand stack is prescribed in the decoded instruction, entry addresses in the consolidated register file, to the number of words to be popped, are popped from the advanced pointer stack. In the case that a push operation onto the operand stack is prescribed in the decoded instruction, free entries of the consolidated register file are allocated, to the number of words to be pushed, and the addresses of the newly allocated entries of the consolidated register file are pushed onto the advanced pointer stack. And moreover, substance of the decoded instruction, together with the popped / pushed entry addresses in the consolidated register file in the case that the instruction includes a pop / push operation, is written into the instruction buffer. In the case that the instruction requires execution by a functional unit, the same substance of the instruction that is written into the instruction buffer is written into a free reservation station of an appropriate functional unit as well.

The contents of each entry of the consolidated register file whose address is popped from the advanced pointer stack are read out, and if data is already written, the entry address and the data are to be later put on the common data bus.

In regard to each instruction held in a reservation station, as a general rule, the following action is to be performed. In each reservation station, each address of entry of the consolidated register file to hold source data is compared with entry addresses delivered through the common data bus, and if any matched, the data is taken into the reservation station. After required source data are fully arranged, the instruction gets to be performed. In the case of an instruction that pushed an entry address in the consolidated register file onto the advanced pointer stack when decoded, result data produced by a functional unit, together with the pushed entry address in the consolidated register file, is put on the common data bus. In accordance with contents delivered through the common data bus, data are written in the consolidated register file.

When the instruction held in the head entry of the queue retained in the instruction buffer is/becomes ready to be completed, in accordance with the substance in the head entry of the queue, the completed pointer stack is manipulated so as to reproduce the operation that was applied on the advanced pointer stack in the course of decoding of the instruction, the head entry is dequeued, and each entry of the consolidated register file whose address the completed pointer stack loses hold of on account of a pop operation is released from allocation.

### BRIEF DESCRIPTION OF THE DRAWINGS

Fig. 1 is a block diagram showing the basic structure of a preferred computer system according to the present invention;
Fig. 2 illustrates the structure of the advanced pointer stack and the completed pointer stack;
Fig. 3 illustrates the detailed structure of an entry of the consolidated register file;
Fig. 4 illustrates the structure of the instruction buffer;
Fig. 5 illustrates the detailed structure of an entry of the instruction buffer;
Fig. 6 - 14 show contents of the advanced pointer stack, the completed pointer stack, the instruction buffer, and the consolidated register file, at each cycle in the course of an example action in an embodiment of the present invention; and
Fig. 15 is a diagram showing how an example program is converted in the case that the computer system of the present invention is so structured as to be able to decode up to two instructions per cycle.

### PREFERRED EMBODIMENTS OF THE INVENTION

In the following, a preferred computer system according to the present invention is described with reference to the figures. Now, the computer system described below, which is an embodiment of the present invention, is so structured as to execute basic instructions of a stack machine prescribed by Java Virtual Machine (Java VM) in hardware. Namely, loads, stores and operations including arithmetic/logic operations are to be performed by the word, which is 32 bits wide. Therefore, for example, an arithmetic operation between two-word data produces a two-word result from 4 words ― 2 two-word ― of source data.

In the following, the stack that data are to be pushed onto /popped from by the word in the context of traditional stack machines is referred to as word stack to be distinguished from pointer stacks described later.

In the context of Java VM, each time a method is invoked, a frame is established on the word stack. Each frame is so structured that the lower part is storage areas of local variables, parameters and so on, and the upper part is the operand stack.

In Java VM, complex instructions that are not, by nature, supposed to be executed in hardware are prescribed. The computer system described below, which is an embodiment of the present invention, though, is so structured as to execute basic instructions listed in the following in hardware.
(a) Instructions to Push Immediate Data onto the Operand Stack
   bipush, sipush, aconst_null, iconst_m1, iconst_<i>, fconst_<f>, lconst_<l>, dconst_<d>
(b) Instructions to Load Variable Data onto the Operand Stack
   ldc1, ldc2, iload, iload_<n>, fload, fload_<n>, aload, aload_<n>, ldc2w, lload, lload_<n>, dload, dload_<n>, iaload, laload, faload, daload, aaload, baload, caload, saload
(c) Instructions to Store Data on the Operand Stack into Variables
   istore, istore_<n>, fstore, fstore_<n>, astore, astore_<n>, Istore, lstore_<n>, dstore, dstore_<n>, iastore, lastore, fastore, dastore, aastore, bastore, castore, sastore
(d) Instructions to Generate Result Data
   (d-1) Arithmetic Instructions
      iadd, ladd, fadd, dadd, isub, lsub, fsub, dsub, imul, lmul, fmul, dmul, idiv, ldiv, fdiv, ddiv, irem, lrem, frem, drem, ineg, lneg, fneg, dneg
   (d-2) Logical Instructions
      ishl, ishr, iushr, lshl, lshr, lushr, iand, land, ior, lor, ixor, lxor
   (d-3) Conversion Instructions
      i2l i2f, i2d, l2i, l2f, l2d, f2i, f2l f2d, d2i, d2l d2f, int2byte, int2char, int2short
   (d-4) Compare Instructions
      lcmp, fcmpl, fcmpg, dcmpl, dcmpg
(e) Stack Instructions
   pop, pop2, dup, dup2, dup_x1, dup2_x1 dup_x2, dup2_x2, swap
(f) Branch Instructions
   ifeq, ifnull, iflt, ifle, ifne, ifnonnull, ifgt, ifge, if_icmpeq, if_icmpne, if_icmplt, if_icmpgt, if_icmple, if_icmpge, goto, goto_w

Hereafter, unless otherwise stated, "instruction" is to be identified as one of the above instructions.

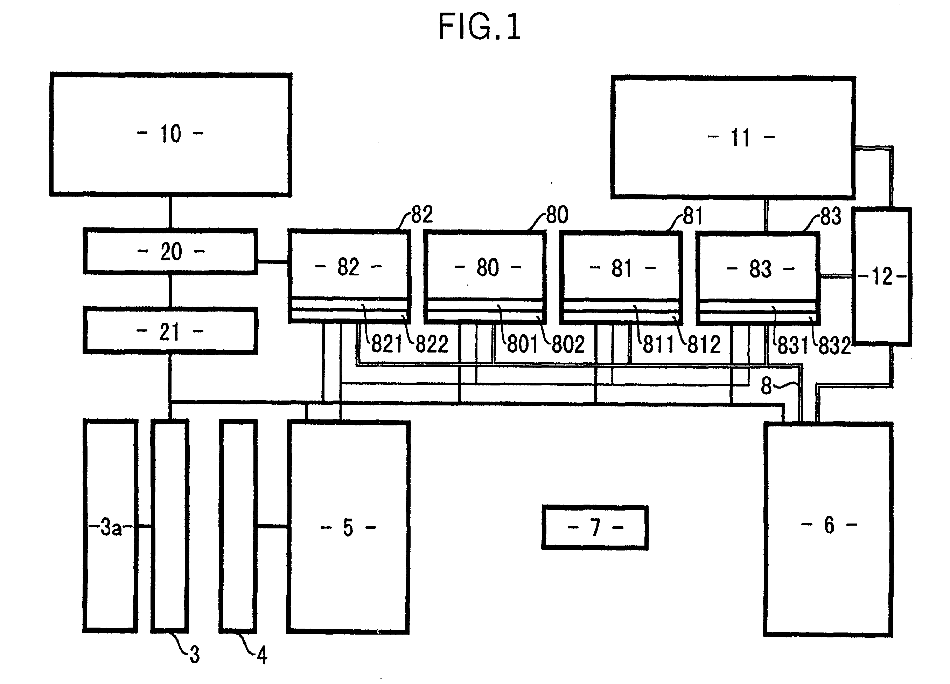

Fig. 1 is a block diagram of the computer system. Shown in Fig. 1 are an instruction cache 10, a data cache 11, a data buffer 12, an instruction fetch unit 20, an instruction decode-and-issue unit 21, an advanced pointer stack 3, an advanced pointer stack history file 3a, a completed pointer stack 4, an instruction buffer 5, a consolidated register file 6, a free list 7, a common data bus 8, arithmetic logic unit 0/1 80 and 81, a branch unit 82, a load/store unit 83, and reservation stations 801, 802, 811, 812, 821, 822, 831 and 832.

Described below are the detailed structure of each component of the computer system of the embodiment of the present invention.

### (A) Instruction Fetch Unit

The instruction fetch unit is furnished with a program counter (pc register), which is not shown in the figures, and so structured as to fetch instructions from the instruction cache and deliver them to the instruction decode-and-issue unit. It also carries out prediction and execution of branches.

### (B) Instruction Decode-and-Issue Unit

The instruction decode-and-issue unit is so structured as to decode instructions delivered from the instruction fetch unit, and generate various signals to set the advanced pointer stack, the instruction buffer, the consolidated register file and the like - each described later - so that instructions comprising a program will be executed out of order.

### (C) Pointer Stacks

A pointer stack is made of a register file, each entry of which is designed to hold an entry address in the consolidated register file.

State of the word stack such as {...... word1, word2, word3, word4} (the right end is the top of the stack) in a traditional stack machine corresponds to state in which state of pointer stack is such as {...... <a>, <b>, <c>, <d>} (the right end is the top of the stack), and in which word1, word2, word3 and word4 are respectively held in the entries of the consolidated register file whose addresses are <a>, <b>, <c> and <d>, in the computer system according to the present invention.

The computer system of the present invention is furnished with two pointer stacks: an advanced pointer stack (APS) and a completed pointer stack (CPS).

In the computer system of the present invention, each time an instruction is decoded, the advanced pointer stack (hereafter, it will be referred to as the APS) and the consolidated register file are manipulated in accordance with the instruction, and substance of the instruction is written into the instruction buffer, and if necessary, into a free reservation station of an appropriate functional unit, so that instructions comprising a program are set to be executed out of order. Namely, the advanced pointer stack is to reflect the stack operations prescribed by all the instructions that have already been decoded and issued.

On the other hand, the completed pointer stack (hereafter, it will be referred to as the CPS) is to reflect the stack operations prescribed by all the instructions that have already been completed in program-sequential order. The computer system of the present invention is capable of out-of-order execution based on the principle of data drive, and for securing precise handling of exceptions, the completed pointer stack enables the system to construct the state grounded on all the instructions completed in order.

In the computer system of the embodiment of the present invention, only contents of the operand stack, which is the upper part of the frame put on top of the word stack, are to be retained by the pointer stacks and the consolidated register file. The remaining part of the word stack is to be stored in the data buffer and the data cache. And, when the operand stack grows so much that its whole contents cannot be retained by the pointer stacks and the consolidated register file, lower contents of the operand stack are to be spilt into the data buffer as described later.

Each pointer stack is constructed as a circular buffer, and has two registers: a push pointer and a bottom pointer. The push pointer indicates the entry over the top one holding an entry address in the consolidated register file. The bottom pointer indicates the lowest entry holding an entry address in the consolidated register file. You can know how many entries are vacant in the pointer stack by subtracting the value of the push pointer from that of the bottom pointer. In the initialized state, the value of the push pointer and that of the bottom pointer are both set to be zero.

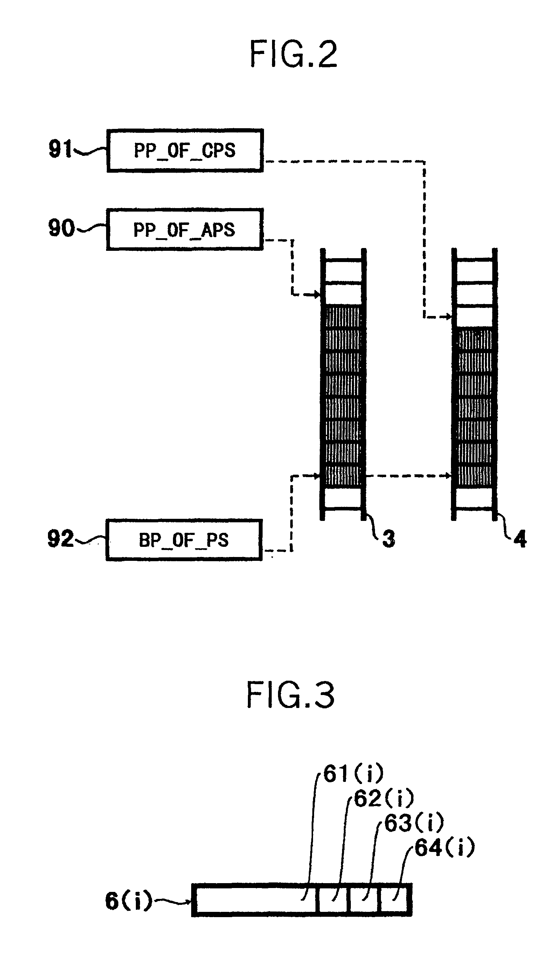

Fig. 2 shows the relation among the pointer stacks, the push pointers and the bottom pointer in the computer system of this embodiment. Two pointer stacks ― APS 3 and CPS 4 ― have the same number of entries, which are supposed to be likewise tagged with address 0, 1, 2, ... from bottom up. Each of the shaded entries is supposed to hold an entry address in the consolidated register file. As shown in Fig. 2, the APS and the CPS are each furnished with a push pointer, which is named PP_OF_APS /PP_OF_CPS. On the other hand, only one bottom pointer exists, which is shared between the APS and the CPS. This is named BP_OF_PS.

Between the APS and the CPS, comparators exist to the number of the entries. Between APS entry and CPS entry of the same entry address (abreast horizontally in Fig. 2), contents are compared.

In the course of decode-and-issue of an instruction, in accordance with a push operation of a word onto the operand stack prescribed by the instruction, the address of the allocated entry of the consolidated register file is to be written into the APS entry indicated by PP_OF_APS and the value of PP_OF_APS is to be increased by one. Conversely, in accordance with a pop operation of a word from the operand stack prescribed by an instruction, the value of PP_OF_APS is to be decreased by one. In the course of completion of an instruction, the CPS and PP_OF_CPS are to be manipulated likewise.

In the case that the content of the entry indicated by BP_OF_PS is identical between the APS and the CPS, a word of data held in the entry of the consolidated register file indicated by that identical content can be spilt into the data buffer. In that case, the value of BP_OF_PS is to be increased by one. Conversely, in filling the consolidated register file with a word of data from the data buffer, the system is to take a word of data out of the data buffer, assign to it a free entry of the consolidated register file, write the data into this entry, write the address of this entry of the consolidated register file into the entry under that indicated by BP_OF_PS both in the APS and in the CPS, and decrease the value of BP_OF_PS by one.

The computer system of this embodiment is furnished with an advanced pointer stack history file (hereafter, it will be referred to as the APS history file) for incarnation of speculative execution based on branch prediction. Each entry of the APS history file is designed to hold contents of all the APS entries and PP_OF_APS.

### (D) Consolidated Register File (CRF)

The consolidated register file (hereafter, it will be referred to as the CRF) is to hold contents of the operand stack of a traditional stack machine in random order.

Fig. 3 illustrates the detailed structure of entry 6(i) of CRF 6 in the computer system of this embodiment. Here, "i" stands for entry address. Each entry 6(i) of CRF 6 comprises data field 61(i), write completion flag (WCF) field 62(i), color (C) field 63(i) and busy bit (BB) field 64(i).

As for the hardware implementation, the CRF is practically made of register files that respectively correspond to the fields listed above.

The data field of each CRF entry is designed to hold a word of data.

The WCF field of each CRF entry is designed to hold "1" in the case that data is already written in the data field, and hold "0" otherwise.

In the C field of each CRF entry, the difference between allocated in compliance with a push operation prescribed by an instruction and allocated in the course of a fill operation from the data buffer is specified. In the former case, a branch tag is also entered. In this embodiment, as described later, there is a certain relationship between branch tags and entry addresses in the APS history file.

The BB field of each CRF entry is designed to hold "1" if the CRF entry is allocated to hold data, and hold "0" if the CRF entry is free.

### (E) Free List (FL)

The free list (hereafter, it will be referred to as the FL) is to hold addresses of free, namely, unallocated (the content of the BB field is "0") CRF entries. In this embodiment, the FL is constructed as a circular FIFO queue.

In the initialized state, the addresses of all CRF entries are registered on the FL. In the case that a free CRF entry needs to be allocated, an address of free CRF entry is to be taken out of the FL. Conversely, when a CRF entry is released from allocation, the address of this entry is to be registered on the FL.

### (F) Instruction buffer (IB)

The instruction buffer (hereafter, it will be referred to as the IB) is a buffer to hold instructions that are already issued but not yet completed, and is constructed as a circular FIFO queue.

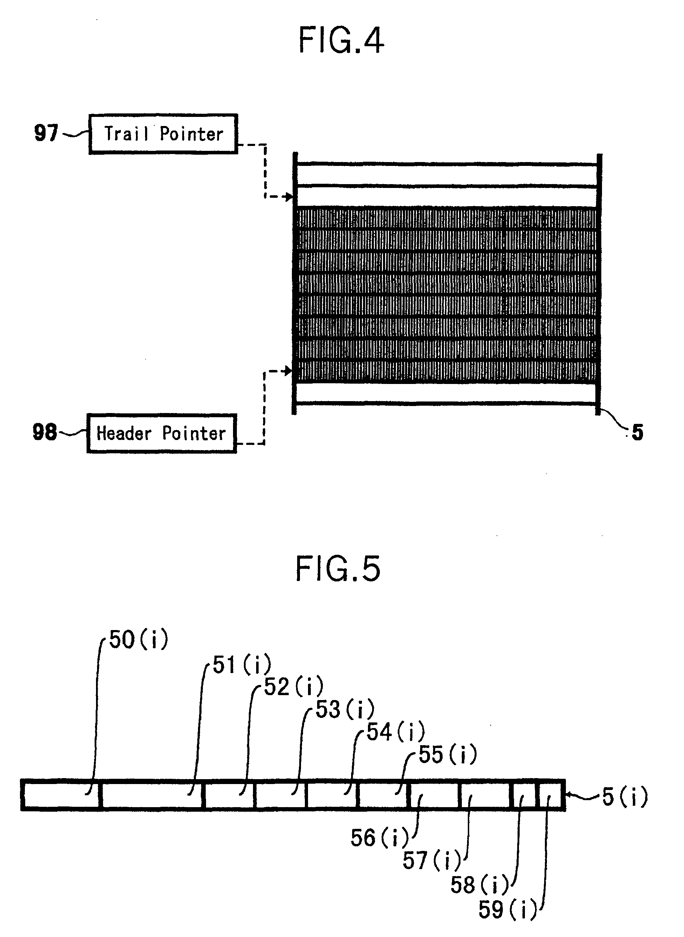

Fig. 4 illustrates the structure of the IB. In Fig. 4, entries of IB 5 are supposed to be tagged with address 0, 1, 2, ... from bottom up, and each of the shaded entries of IB 5 is supposed to hold an instruction that is already issued but not yet completed. The IB is furnished with two registers: a header pointer and a trail pointer. The header pointer indicates the head entry of the queue, and the trail pointer indicates the entry right after the end of the queue. On the assumption that up to one instruction is to be issued / completed per cycle, the trail pointer indicates the entry into which substance of the instruction to be issued next is to be written, and the header pointer indicates the entry in which substance of the instruction to be completed next is held. You can know how many entries are vacant in the IB by subtracting the value of the trail pointer from that of the header pointer. In the initialized state, the value of the header pointer and that of the trail pointer are both set to be zero.

Fig. 5 illustrates the detailed structure of entry 5(i) of IB 5 in the computer system of this embodiment. Here, "i" stands for entry address. Each entry 5(i) of IB 5 comprises operation field 50(i), operand field 51(i), 1st source field 52(i), 2nd source field 53(i), 3rd source field 54(i), 4th source field 55(i), 1st destination field 56(i), 2nd destination field 57(i), branch tag (BT) field 58(i) and state (S) field 59(i).

The operation field of each IB entry is designed to hold an operation code.

In the operand field of each IB entry, in the case of an instruction that specifies an operand after the operation code, the operand is to be entered.

Each of 1st - 4th source field of each IB entry is designed to hold an address of CRF entry allocated to hold source data. In the case that an instruction including a pop operation is decoded, CRF entry addresses popped from the APS, to the number of words to be popped, are to be entered in source fields in the order in which they are popped.

Each of 1st and 2nd destination field of each IB entry is designed to hold an address of CRF entry newly allocated in the course of decode-and-issue of the instruction. In the case that an instruction including a push operation is decoded, CRF entry addresses to be pushed onto the APS, to the number of words to be pushed, are to be entered in destination fields in the order in which they are to be pushed.

The BT field of each IB entry is concerned with speculative execution based on branch prediction. In this embodiment, as described later, there is a certain relationship between branch tags to be entered in BT field and entry addresses in the APS history file.

In the S field of each IB entry, according to the state of the instruction held in the entry, information such as "unexecuted", "executed", "normal termination" and "occurrence of exception" is to be specified.

### (G) Common Data Bus (CDB)

The common data bus (hereafter, it will be referred to as the CDB) is a communication channel through which data and their respective CRF entry addresses are to be distributed among later-described functional units and the CRF. The CDB is so multilined that enough bandwidth may be secured.

### (H) Functional Units

The computer system of this embodiment is furnished with 4 functional units: arithmetic logic unit 0/1, a branch unit and a load/store unit. In this embodiment, each of the functional units basically comprises 2 reservation stations and an executioner part to process assigned instructions. A reservation station (hereafter, it will be referred to as RS) is a buffer to temporally retain substance of an instruction. In the computer system of this embodiment, each RS is designed to further hold the address of the IB entry into which the same substance of an instruction is written in the course of decoding of the instruction.

In decoding an instruction, in accordance with the type of the instruction, if necessary, substance of the instruction is to be written into a free RS of an appropriate functional unit.

In each RS of functional units, each address of CRF entry to hold source data is to be compared with CRF entry addresses delivered through the CDB, and if any matched, the data is to be taken into the RS.

If required source data are fully arranged in a RS retaining substance of an instruction and the executioner part of the functional unit is available, the contents of the RS are to be conveyed to the executioner part and get to be processed.

### (H-1) Arithmetic Logic Unit (ALU)

The computer system of this embodiment is furnished with ALU0 and ALU1. Each of their executioner parts is designed to perform operations such as arithmetic/logic operations, conversion operations and compare operations, and can operate in parallel independently of each other.

The computer system of the present invention can be so structured as to let the executioner part of each ALU have the pipeline processing capability, to be furnished with more ALUs, or to specify types of operations to perform for each ALU.

### (H-2) Branch Unit

The executioner part of the branch unit is so structured as to, in processing each conditional branch instruction, decide upon whether to branch or not, and notifies the instruction fetch unit of the result, together with the branch address.

### (H-3) Load/Store Unit (LSU) and Data Buffer

The executioner part of the load/store unit (hereafter, it will be referred to as the LSU) has the faculty of performing address calculations, and is so structured as to be able to access the data buffer and the data cache.

The data buffer is a circular buffer each entry of which is designed to hold a word of data. The computer system of the present invention is so structured that the uppermost part of the word stack is retained by the pointer stacks and the CRF, and that lower and even lower part are stored in the data buffer and in the data cache, respectively. As the LSU can quickly access the data buffer, the larger proportion of variables to access the data buffer retains, the more efficiently the computation can proceed. And, by letting the data buffer retain an appropriate number of words of data, later-described spill/fill operations between the CRF, the data buffer and the data cache can be streamlined.

The LSU is furnished with a register that holds a pointer to first local variable: vars register, which is not shown in the figures. In the computer system of this embodiment, though the storage area of the first local variable is either in the data buffer or in the data cache, the corresponding address in the data cache is to be held in the vars register. Namely, even if all or part of the local variables are practically held in the data buffer, each local variable can correspond to an address in the data cache on the assumption that all the local variables were spilt into the data cache. So, in processing a load/store instruction, the LSU performs an address calculation referring to the value of the vars register, judges whether the storage area of the object local variable is in the data buffer or in the data cache, and accesses the storage area.

The LSU is equipped with a store buffer (not shown in the figures) that keeps stores in the program-sequential order until all the previous instructions are completed. Namely, stores are to be performed after all the previous instructions are completed. The store buffer is content-addressable. So, checking for dependencies on previous stores, the LSU can perform loads out of order.

Namely, a load has a dependency on a previous store if the load address matches the address of a previous store, or if the address of any previous store is not yet computed (in this case, the dependency cannot be detected, so the dependency is assumed to exist). If there is no dependency, the load is immediately satisfied from the data buffer or the data cache. If a load is dependent on a previous store, the load cannot be satisfied from the data buffer nor the data cache, because neither the data buffer nor the data cache has the correct value. If the address of a load matches the address of a previous store, and if the store data is valid, the load is satisfied directly from the store buffer, rather than waiting for the store to be completed.

The LSU is so structured as not only to perform loads and stores specified in the program, but also to automatically perform spill/fill operations between the CRF and the data buffer, in evading overflow/underflow or in compliance with creation/discard of a frame at the top of the word stack in a method invocation/return (in this connection, in a method invocation, it is to be desired to simultaneously perform stores from the top of the stack with the value of the vars register updated).

For a spill of a word of data from the CRF into the data buffer, the content of the bottom entry (indicated by BP_OF_PS) holding a CRF entry address needs to be identical between the APS and the CPS (otherwise, the spill is to be deferred). In that case, a word of data held in the CRF entry indicated by that identical content can be spilt into the data buffer. At this juncture, the value of BP_OF_PS is to be increased by one, the BB field of the above CRF entry is to be altered to "0", and the address of this entry is to be registered on the FL.

Conversely, in filling the CRF with a word of data from the data buffer, the system is to take a word of data out of the data buffer, assign to it a free CRF entry, write the data into the data field of this entry, whose WCF field and BB field are set to be "1", write the address of the assigned CRF entry into the entry under the bottom one (indicated by BP_OF_PS) holding a CRF entry address both in the APS and in the CPS, and decrease the value of BP_OF_PS by one.

Besides, between the data buffer and the data cache, spill/fill operations are to be performed properly in accordance with vacancies in the data buffer.

The system can be so structured that, with two pointer stacks (the APS and the CPS), the data buffer and the data cache each divided into interleaved banks, operations similar to the above are respectively performed between corresponding banks, so that spill/fill of a plurality of words of data may be performed at once between the CRF, the data buffer and the data cache. In this case, for spill/fill, each of the APS, the CPS, the data buffer and the data cache needs to have a read/write port for each bank, and the CRF needs to have as many read/write ports as the interleaved divisions.

Next, the behavior of the computer system of the embodiment of the present invention is described.

The computer system of this embodiment processes instructions through four stages: (1) instruction fetch, (2) instruction decode-and-issue, (3) execution; and (4) completion. For a while, for the sake of simplicity, on the assumption that up to one instruction can be decoded and issued / completed per cycle, the behavior in each stage is described below.

### (1) Instruction Fetch Stage

In this stage, the instruction fetch unit fetches an instruction from the instruction cache, and determines the address of the instruction to fetch next. Ordinarily, it is from the next address to fetch next. But, in the case that the fetched instruction is either an unconditional branch instruction or a conditional branch instruction with a prediction of taking a branch, that a branch prediction turns out to have missed, or that an exception occurs, the address of the instruction to fetch next is changed.

### (2) Instruction Decode-and-Issue Stage

In this stage, to set an instruction comprising a program to be executed out of order, the system decodes the instruction, manipulates the advanced pointer stack (APS) and the consolidated register file (CRF) in accordance with the instruction, and writes substance of the instruction into the instruction buffer (IB), and if necessary, into a free RS of an appropriate functional unit. In the following, setting acts are described in detail.

In the computer system of the present invention, the contents of the vicinity of the top of the word stack of a traditional stack machine is reproduced on the pointer stacks and the CRF, and the same kind of stack operation as that to be applied originally on the operand stack prescribed by the instruction is applied on the APS. Here, in emulating a push operation of a word of data onto the operand stack, the system allocates a free CRF entry to hold the data, and pushes the address of this entry onto the APS.

Namely, in the case that a pop operation from the operand stack is prescribed in the decoded instruction, CRF entry addresses, to the number of words to be popped, are popped from the APS. In the case that a push operation onto the operand stack is prescribed in the decoded instruction, free CRF entries are allocated, to the number of words to be pushed, and the addresses of these newly allocated CRF entries are pushed onto the APS.

In the case of a stack instruction (pop, pop2, dup, dup2, dup_x1, dup2_x1 dup_x2, dup2_x2 and swap defined in Java VM), basically, the same kind of stack operation as that to be applied originally on the operand stack is applied on the APS. In this embodiment, in the case of a stack instruction that involves duplication on the stack (dup, dup2, dup_x1, dup2_x1, dup_x2 and dup2_x2 defined in Java VM), for each duplication of a word, the system allocates a free CRF entry to hold copy data, and writes the address of this entry into the appropriate APS entry.

In each CRF entry newly allocated in the course of decode-and-issue of an instruction, the BB field is altered to "1", and the branch tag forwarded from the instruction decode-and-issue unit is entered in the C field. In the case of an instruction to push immediate data, as the data is already given, the data is written into the data field, and the WCF field is set to be "1". In the case of any other instruction, as the data is not yet given at the decode-and-issue stage, the WCF field is set to be "0".

To let the IB hold substance of the decoded instruction in program-sequential order, the substance of the instruction is written into the IB entry indicated by the trail pointer, and the value of the trail pointer is increased by one. Namely, the operation code is written into the operation field, and in the case that the instruction is such as to specify an operand after the operation code, the operand is written into the operand field. The branch tag forwarded from the instruction decode-and-issue unit is entered in the BT field. The S field is specified as "executed" in the case of an unconditional branch instruction, an instruction to push immediate data onto the operand stack, or a stack instruction that involves no duplication on the stack (pop, pop2 and swap defined in Java VM), and as "unexecuted" in the case of any other instruction.

In the case of an instruction including a pop operation, CRF entry addresses popped from the APS, to the number of words to be popped, are entered in source fields in the order in which they are popped. In the case of an instruction including a push operation, CRF entry addresses to be pushed onto the APS, to the number of words to be pushed, are entered in destination fields in the order in which they are to be pushed.

In this embodiment, in the case of a stack instruction that involves duplication on the stack, the address of each CRF entry allocated to hold data to be copied is entered in the appropriate source field, and the address of each CRF entry newly allocated to hold copy data is entered in the appropriate destination field, in a certain correspondence.

The number of words to be popped from / pushed onto the operand stack (the number of words to be copied, in the case of a stack instruction) is determined by the type of the instruction. So, referring to the content of the operation field, you can know which is/are significant of 1st - 4th source field and 1st - 2nd destination field.

In accordance with the type of the instruction, if necessary, the substance of the instruction is written into a free RS of an appropriate functional unit, together with the address of the IB entry into which the same substance of the instruction is being written ― the value of the trail pointer, on the assumption that up to one instruction can be issued per cycle. Here, it is in the case of an instruction to push immediate data onto the operand stack, a stack instruction that involves no duplication on the stack, or an unconditional branch instruction, that substance of instruction need not be written into a free RS. In this embodiment, in the case of a stack instruction that involves duplication on the stack, the substance of the instruction is to be written into a free RS of ALU1.

From each CRF entry whose address is (popped from the APS and) entered in a source field in the IB, contents of the WCF field and the data field are read out. If the WCF-field content is "1", the entry address and the data will be put on the CDB after the present cycle.

### (3) Execution Stage

In regard to instructions that were each written into a RS in the instruction decode-and-issue stage, as a general rule, the following action is to be performed.
- In each RS, each address of CRF entry to hold source data is compared with CRF entry addresses delivered through the CDB, and if any matched, the data is taken into the RS. In this embodiment, data that is delivered through the CDB in the same cycle that substance of an instruction is written into a RS can be taken into this RS.
- If required source data are fully arranged in a RS and the executioner part of the functional unit is available, the contents of the RS are conveyed to the executioner part and get to be processed. At this time, the RS is released from holding the instruction.
- In the case of such an instruction as to have something entered in a destination field in the IB (push a CRF entry address onto the APS) when decoded, result data produced by executing the instruction, together with the address of the destination CRF entry, is put on the CDB. In accordance with contents delivered through the CDB, data are written in the CRF, and WCF fields are altered to "1" accordingly.
- After the above acts are finished normally, the S field of the IB entry (that holds the instruction) whose address was specified in the RS is altered to "normal termination".

Described above is a general rule that applies to most instructions. In the computer system of this embodiment, though, the following exceptional acts are to be performed in accordance with the type of instruction.
- In the case that a RS of the LSU holds a store instruction that requires an address calculation from data popped from the operand stack (iastore, lastore, fastore, dastore, aastore, bastore, castore and sastore defined in Java VM), right after source data required for the address calculation is arranged ― even if source data are not fully arranged yet ―, the store address is computed and written into the store buffer.
- In the case that a RS of the LSU holds a store instruction, right after the store address and the store data are both arranged in the store buffer, the S field of the IB entry (that holds the store instruction) whose address was specified in the RS is altered to "store executable". As described above, the actual store will be performed in the completion stage.
- In the case that a RS of ALU1 holds a stack instruction that involves duplication on the stack, right after source data is written, this data is put on the CDB, together with the address of the CRF entry that is designated as the destination in a certain correspondence. After the data transfer is finished normally for each destination, the S field of the IB entry (that holds the instruction) whose address was specified in the RS is altered to "normal termination".

As described above, each of unexecuted instructions held in the IB is to be executed after becomes executable on the principle of data drive. Therefore, instructions are executed out of order. Besides, the functional units ― ALU0/1 the branch unit, and the load/store unit ― operate in parallel independently of each other.

In the case that an exception occurs in executing an instruction, this information is written into the S field of the IB entry that holds the instruction, and communicated to the instruction fetch unit.

### (4) Completion Stage

An instruction can be completed, after all the instructions before that instruction in program-sequential order are completed.

When the content of the S field is/becomes "executed" or "normal termination" in the IB entry indicated by the header pointer, the CPS and the CRF are manipulated in accordance with the substance of the instruction held in the entry, and the value of the header pointer is increased by one.

The CPS is manipulated so as to reproduce the operation that was applied on the APS in the course of decode-and-issue of the instruction. Namely, in the case of an instruction including a pop / push operation, the same content as in each significant source field is popped from the CPS in order, and the content of each significant destination field is pushed onto the CPS in order. In the case of a stack instruction that involves no duplication on the stack, the same operation as that to be applied originally on the operand stack is applied on the CPS. In this embodiment, in the case of a stack instruction that involves duplication on the stack, referring to each significant source field and destination field, the system reproduces, on the CPS, the operation that was applied on the APS in the course of decode-and-issue of the instruction.

In this embodiment, in accordance with the above-mentioned manipulation applied on the CPS, with regard to each CRF entry whose address is popped from the CPS, the BB field is altered to "0", and the entry address gets to be registered on the FL.

In the case that the IB entry indicated by the header pointer holds a store instruction, when the content of the S field is/becomes "store executable", the system requests the LSU to perform the actual store. Thus, data are to be stored in program-sequential order for sure. Besides, the CPS and the CRF are manipulated in the same manner as above, and the value of the header pointer is increased by one.

As described above, the instruction held in the IB entry that has been dequeued by adding one to the value of the header pointer is taken as completed. As all the instructions that had been issued before that instruction have been completed, completion of instructions is conducted in order.

In the case that the content of the S field is/becomes "occurrence of exception" in the IB entry indicated by the header pointer, as the virtual state at the point of the occurrence of exception on the assumption that the program was being executed in order can be constructed by means of the CPS and the CRF at this time, precise handling of exceptions can be materialized. To cancel all the instructions that have been issued after the instruction that caused an exception, the system releases each CRF entry indicated in significant destination fields of IB entries holding instructions to be canceled by altering the BB field back to "0" and registering the entry address on the FL, and dequeues the IB entries each holding an instruction to be canceled by writing the value of the header pointer plus one into the trail pointer.

The above is the overall behavior of the computer system of the embodiment of the present invention.

Next, an example action is described. Now, let's consider processing the following program with the computer system of this embodiment.
- dload [A];: load of double-precision floating-point data corresponding to variable name [A]
- dload (B];: load of double-precision floating-point data corresponding to variable name [B]
- dadd;: add between double-precision floating-point data
- d2f;: conversion from double-precision floating-point data to single-precision floating-point data
- fload [T];: load of single-precision floating-point data corresponding to variable name [T]
- swap;: swap the top two words on the stack
- dup_x1;: duplicate the top word on the stack and insert the copy below the second-from-top word
- fsub ;: subtract between single-precision floating-point data
- fdiv;: divide between single-precision floating-point data
- fstore [X];: store of single-precision floating-point data on the top of the stack into the area corresponding to variable name [X]

The above program is to compute X=(A+B)/{T-(A+B)}, where data of A and B are given and added as double-precision floats, the result is converted into a single-precision float, and the rest goes on in single-precision float.

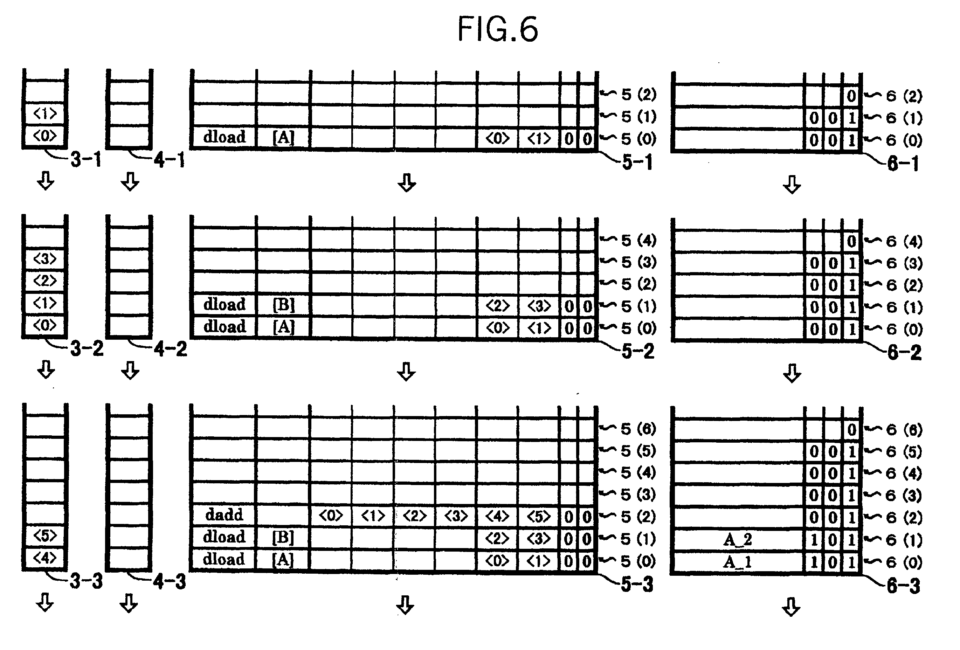

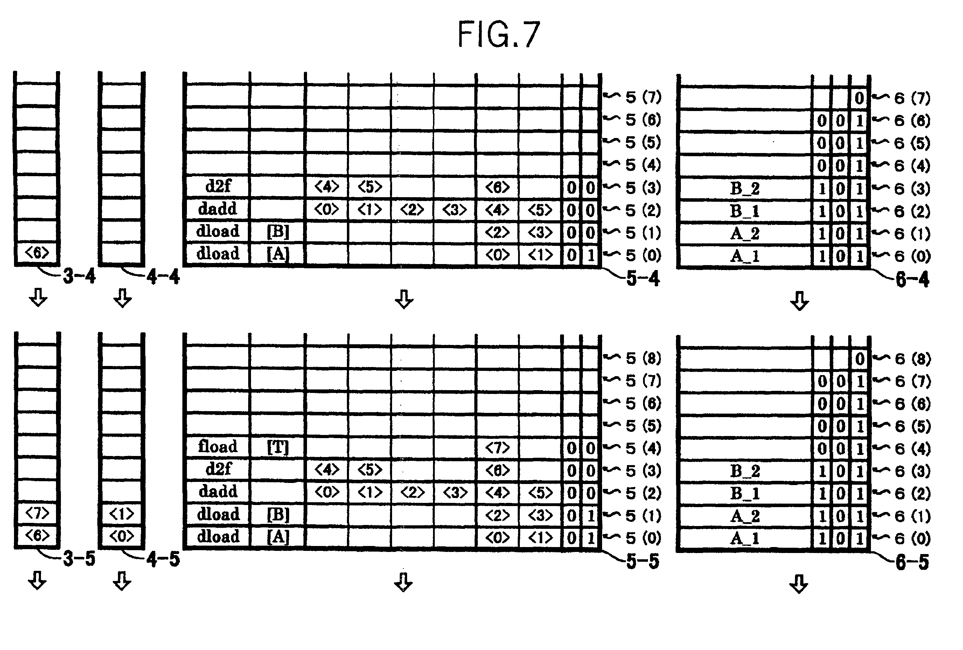

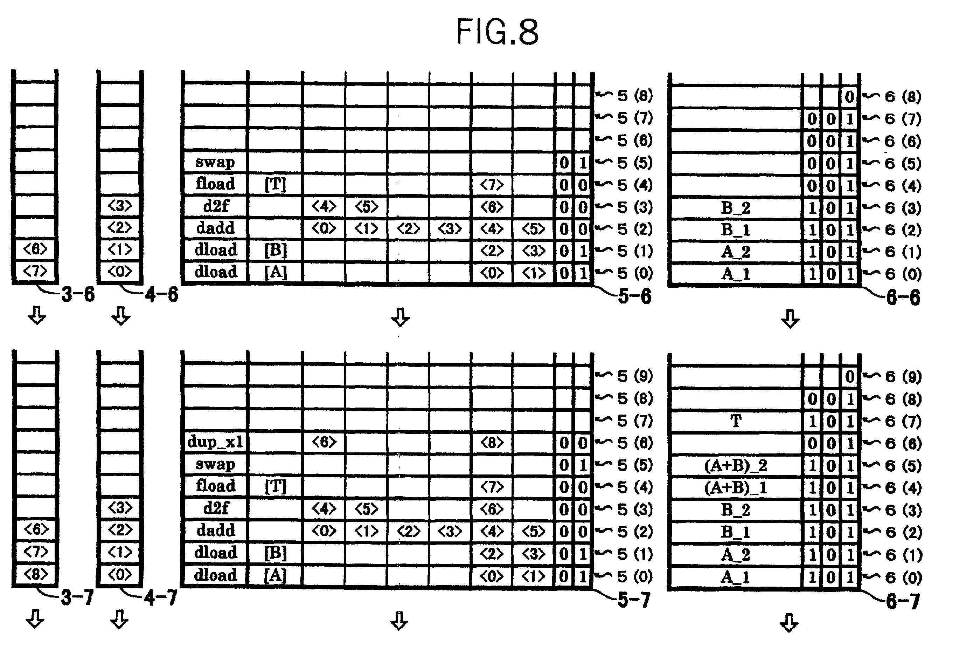

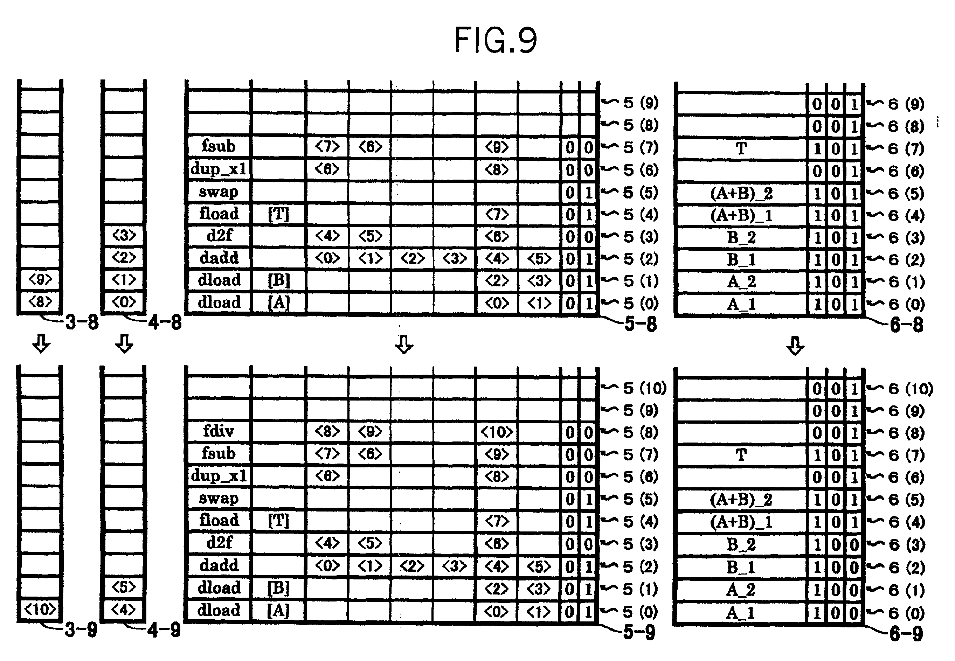

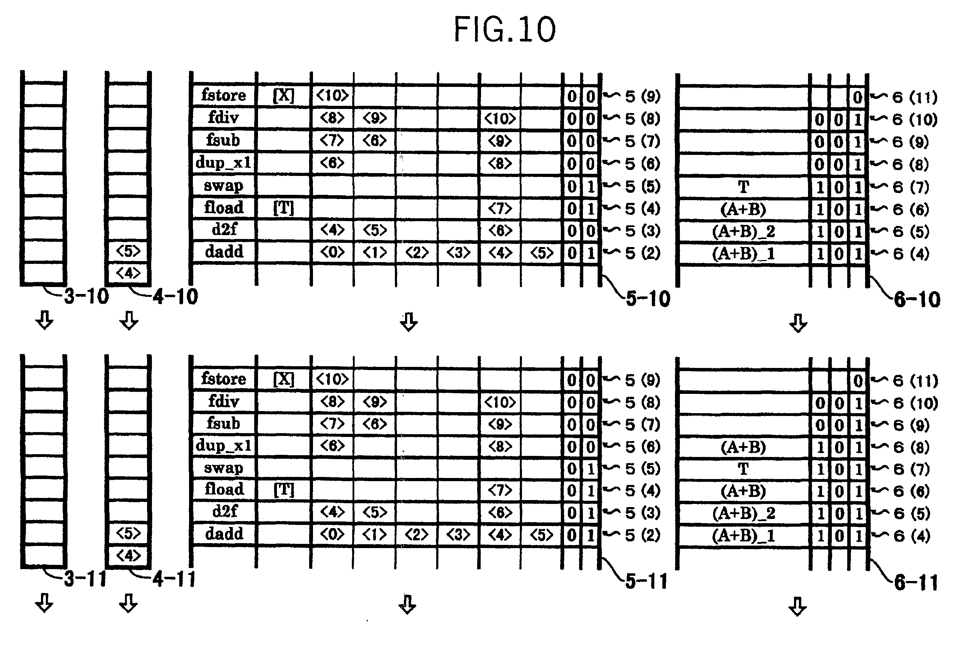

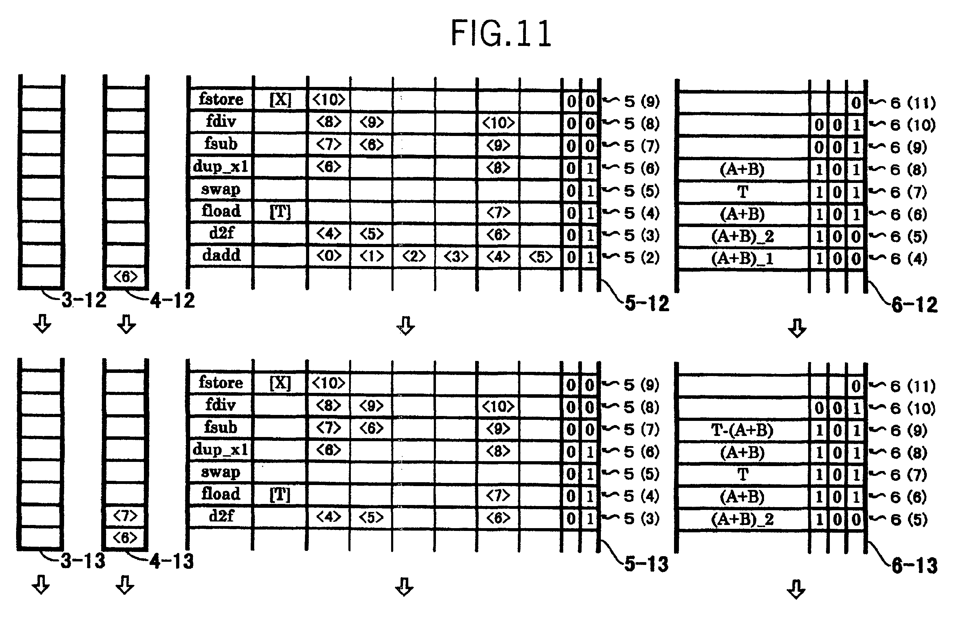

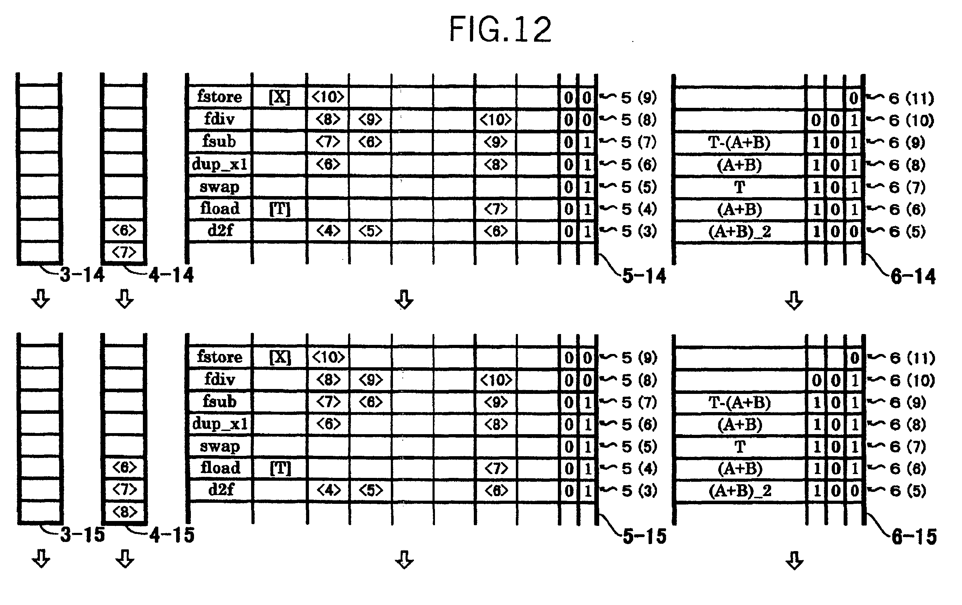

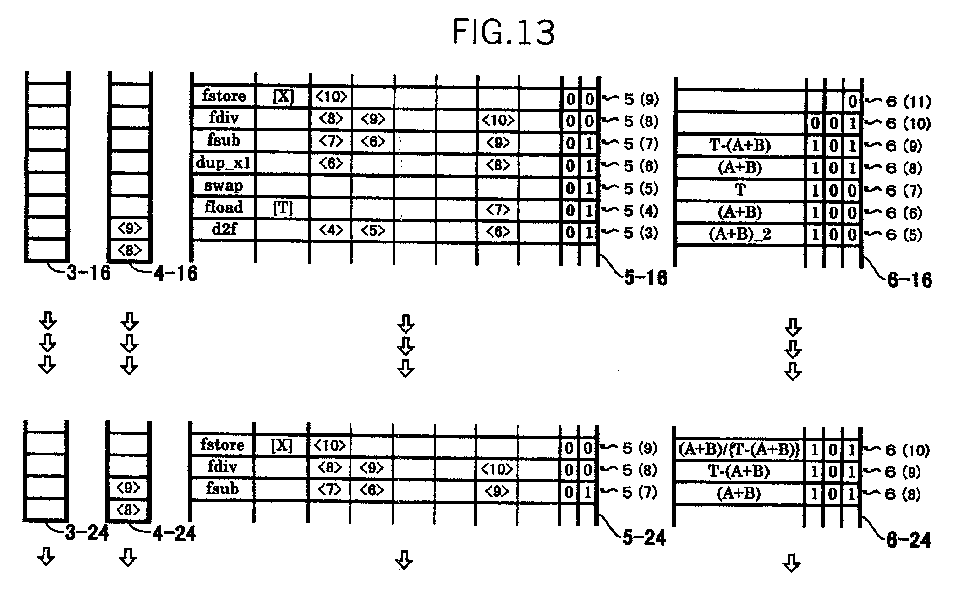

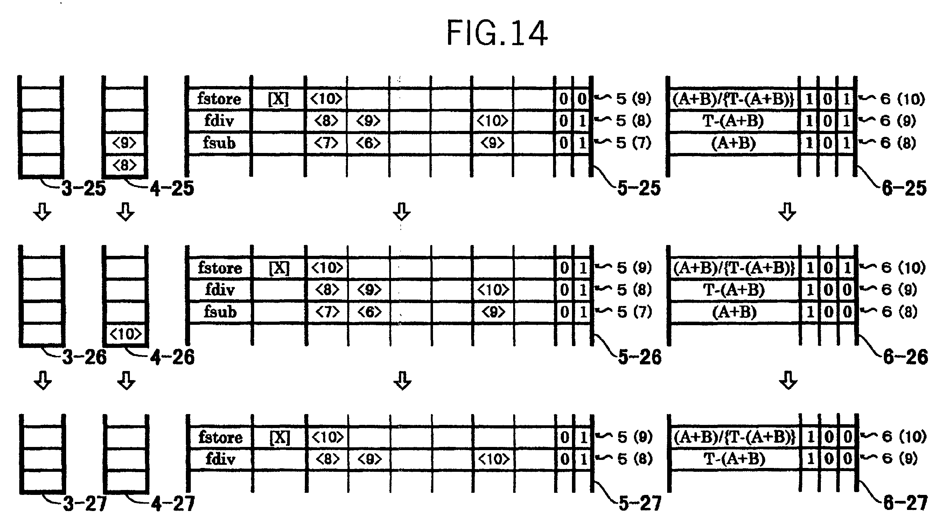

Fig. 6 - 14 show acts of the computer system of this embodiment, at each cycle in the course of processing of the above program. With reference to these figures, detailed action is described below. In Fig. 6 - 14, the structure of each entry of CRF 6 / IB 5 is the same as in Fig. 3 /Fig. 5. You need not pay attention to blank fields in Fig. 6 - 14. For the sake of tracing of contents of each component, each reference numeral is followed by a hyphen and a cycle-wise increasing number. And, in Fig. 6 - 14, the entries of the APS/CPS/IB/CRF are supposed to be tagged with address 0, 1, 2,... from bottom up.

The CDB is supposed to comprise three buses. It is supposed that each arithmetic/logic instruction whose latency is not more than 2 cycles is to be executed by ALU0, and that any other arithmetic/logic instruction is to be executed by ALU1.

In this example action, it is supposed, for the sake of simplicity, that all the variable data are stored in the data buffer, and that no spill/fill operation between the CRF and the data buffer is to be performed. Therefore, the value of BP_OF_PS is "0" from beginning to end.

Besides, in this example action, it is supposed that, at the outset, the APS, CPS, IB and CRF are initialized and all the CRF entry addresses are held in the FL in order (i.e. <0>, <1>, <2>, <3>, ..... ), and that they are to be taken out in this order.

In the following, acts in each cycle are described in detail for individual stages: (A) instruction decode-and-issue, (B) execution, and (C) completion.

### (1-A) Instruction Decode-and-Issue Stage in the 1st cycle

Instruction dload [A] is decoded and issued. As it is an instruction to load two-word variable data onto the operand stack, two free CRF entries 6(0), 6(1), which have been registered on the FL, are allocated to hold the data, and entry addresses <0>, <1> are pushed onto the APS. Then, the APS turns out as 3-1.

In each of CRF entries 6(0), 6(1), the BB field is altered to "1", and "0" is entered in the WCF field and in the C field. Then, the CRF turns out as 6-1. Here in this example action, from beginning to end, as branch tag, "0" is supposed to be forwarded from the instruction decode-and-issue unit.

As the value of the trail pointer is "0", substance of the above instruction is written into IB entry 5(0). Then, the IB turns out as 5-1. At this juncture, CRF entry addresses <0>, <1>, which are being pushed onto the APS, are entered in 1st and 2nd destination field, respectively. Besides, increased by one, the value of the trail pointer gets to be "1". Here in this example action, the S field of each IB entry is supposed to hold "0" if the instruction is unexecuted, and hold "1" if the instruction is executed, normally terminated, or store executable.

The same substance of the above instruction that is being written into IB entry 5(0), together with IB entry address "0", is written into RS 831 of the LSU, which has been free.

### (1-B) Execution Stage in the 1st cycle

No operation of the execution stage is performed.

### (1-C) Completion Stage in the 1st cycle

In the IB at the outset, as no instruction has been written in entry 5(0), which is indicated by the header pointer, no operation of the completion stage is performed.

### (2-A) Instruction Decode-and-Issue Stage in the 2nd cycle

Instruction dload [B] is decoded and issued. As it is an instruction to load two-word variable data onto the operand stack, two free CRF entries 6(2), 6(3), which have been registered on the FL, are allocated to hold the data, and entry addresses <2>, <3> are pushed onto the APS. Then, the APS turns out as 3-2.

In each of CRF entries 6(2), 6(3), the BB field is altered to "1", and "0" is entered in the WCF field and in the C field. Then, the CRF turns out as 6-2.

As the value of the trail pointer is "1", substance of the above instruction is written into IB entry 5(1). Then, the IB turns out as 5-2. At this juncture, CRF entry addresses <2>, <3>, which are being pushed onto the APS, are entered in 1st and 2nd destination field, respectively. Besides, increased by one, the value of the trail pointer gets to be "2".

The same substance of the above instruction that is being written into IB entry 5(1), together with IB entry address "1", is written into RS 832 of the LSU, which has been free.

### (2-B) Execution Stage in the 2nd cycle

The executioner part of the LSU executes the load conveyed from RS 831. Namely, accessing the data buffer, it reads out two-word data of variable A.

### (2-C) Completion Stage in the 2nd cycle

In the IB in state 5-1, as the content of the S field is "0" in entry 5(0), which is indicated by the header pointer, no operation of the completion stage is performed.

### (3-A) Instruction Decode-and-Issue Stage in the 3rd cycle

Instruction dadd is decoded and issued. As it is an instruction to pop four words of source data from the operand stack, operate on them and push two-word result, <0>, <1>, <2> and <3> are popped from the APS, two free CRF entries 6(4), 6(5), which have been registered on the FL, are allocated to hold the result, and entry addresses <4>, <5> are pushed onto the APS. Then, the APS turns out as 3-3.

In each of CRF entries 6(4), 6(5), the BB field is altered to "1", and "0" is entered in the WCF field and in the C field.

As the value of the trail pointer is "2", substance of the above instruction is written into IB entry 5(2). At this juncture, CRF entry addresses <0>, <1>, <2>, <3>, which are being popped from the APS, are entered in 1st - 4th source field, and <4> and <5>, which are being pushed onto the APS, are entered in 1st and 2nd destination field, respectively. Besides, increased by one, the value of the trail pointer gets to be "3".

The same substance of the above instruction that is being written into IB entry 5(2), together with IB entry address "2", is written into RS 801 of ALU0, which has been free (the latency of operation dadd is supposed to be 2 cycles).

And, contents of the WCF field and the data field of entries 6(0), 6(1), 6(2), 6(3) of the CRF in state 6-2 are read out. In this case, as each WCF-field content is "0", there is no need of data delivery.

### (3-B) Execution Stage in the 3rd cycle

The LSU puts two words A_1, A_2 ― the data of variable A ―, which were read out of the data buffer, on the CDB, together with respective destination CRF entry addresses <0>, <1>. Upon this, those data are respectively written into CRF entries 6(0), 6(1), in each of which the WCF field is altered to "1". And, the data respectively coupled with CRF entry addresses <0>, <1> are written into RS 801 of ALU0, into which the same substance that is being written into IB entry 5(2) is written in the same cycle.

Thus, execution of the instruction held in IB entry 5(0) is finished normally, so, in the next cycle, the S field of 5(0) will be altered to "1", which means normal termination.

In parallel with the above acts, the executioner part of the LSU executes the load conveyed from RS 832. Namely, accessing the data buffer, it reads out two-word data of variable B.

### (3-C) Completion Stage in the 3rd cycle

In the IB in state 5-2, as the content of the S field is "0" in entry 5(0), which is indicated by the header pointer, no operation of the completion stage is performed.

### (4-A) Instruction Decode-and-Issue Stage in the 4th cycle

Instruction d2f is decoded and issued. As it is an instruction to pop two words of source data from the operand stack, convert them and push a word of result, <4> and <5> are popped from the APS, free CRF entry 6(6), which has been registered on the FL, is allocated to hold the result, and entry address <6> is pushed onto the APS. Then, the APS turns out as 3-4.

In CRF entry 6(6), the BB field is altered to "1", and "0" is entered in the WCF field and in the C field.

As the value of the trail pointer is "3", substance of the above instruction is written into IB entry 5(3). At this juncture, CRF entry addresses <4>, <5>, which are being popped from the APS, are respectively entered in 1st and 2nd source field, and <6>, which is being pushed onto the APS, is entered in 1st destination field. Besides, increased by one, the value of the trail pointer gets to be "4".

The same substance of the above instruction that is being written into IB entry 5(3), together with IB entry address "3", is written into RS 802 of ALU0, which has been free (the latency of operation d2f is supposed to be 2 cycles).

And, contents of the WCF field and the data field of entries 6(4), 6(5) of the CRF in state 6-3 are read out. In this case, as each WCF-field content is "0", there is no need of data delivery.

### (4-B) Execution Stage in the 4th cycle

The LSU puts two words B_1, B_2 ― the data of variable B ―, which were read out of the data buffer, on the CDB, together with respective destination CRF entry addresses <2>, <3>. Upon this, those data are respectively written into CRF entries 6(2), 6(3), in each of which the WCF field is altered to "1". And, the data respectively coupled with CRF entry addresses <2>, <3> are written into RS 801 of ALU0, which holds the same substance as in IB entry 5(2), as well.

Thus, execution of the instruction held in IB entry 5(1) is finished normally, so, in the next cycle, the S field of 5(1) will be altered to "1", which means normal termination.

### (4-C) Completion Stage in the 4th cycle

In the IB in state 5-3, as the content of the S field is "0" in entry 5(0), which is indicated by the header pointer, no operation of the completion stage is performed.

### (5-A) Instruction Decode-and-Issue Stage in the 5th cycle

Instruction fload [T] is decoded and issued. As it is an instruction to load a word of variable data onto the operand stack, free CRF entry 6(7), which has been registered on the FL, is allocated to hold the data, and entry address <7> is pushed onto the APS. Then, the APS turns out as 3-5.

In CRF entry 6(7), the BB field is altered to "1", and "0" is entered in the WCF field and in the C field.

As the value of the trail pointer is "4", substance of the above instruction is written into IB entry 5(4). At this juncture, CRF entry address <7>, which is being pushed onto the APS, is entered in 1st destination field. Besides, increased by one, the value of the trail pointer gets to be "5".

The same substance of the above instruction that is being written into IB entry 5(4), together with IB entry address "4", is written into RS 831 of the LSU, which has been free.

### (5-B) Execution Stage in the 5th cycle

As required source data are fully arranged in RS 801, which holds the substance of instruction dadd, the contents of the RS are conveyed to the executioner part of ALU0 and get to be processed.

### (5-C) Completion Stage in the 5th cycle

In the IB in state 5-4, as the content of the S field has become "1" in entry 5(0), which is indicated by the header pointer, the CPS (and the CRF) is/are manipulated in accordance with the substance of 5(0). Namely, <0> and <1> ― the contents of the destination fields of IB entry 5(0) ― are pushed onto the CPS. Then, the CPS turns out as 4-5. Besides, increased by one, the value of the header pointer gets to be "1". Thus, the instruction held in 5(0) is completed.

### (6-A) Instruction Decode-and-Issue Stage in the 6th cycle

Instruction swap is decoded and issued. As it is the instruction to swap the top two words on the operand stack, the same kind of operation is applied on the APS. Then, the APS turns out as 3-6.

As the value of the trail pointer is "5", substance of the above instruction is written into IB entry 5(5). At this juncture, as instruction swap is a stack instruction that involves no duplication on the stack, the S field is altered to "1", which means executed. Besides, increased by one, the value of the trail pointer gets to be "6".

### (6-B) Execution Stage in the 6th cycle

The executioner part of the LSU executes the load conveyed from RS 831. Namely, accessing the data buffer, it reads out data of variable T.

### (6-C) Completion Stage in the 6th cycle

In the IB in state 5-5, as the content of the S field has become "1" in entry 5(1), which is indicated by the header pointer, the CPS (and the CRF) is/are manipulated in accordance with the substance of 5(1). Namely, <2> and <3> ― the contents of the destination fields of IB entry 5(1) ― are pushed onto the CPS. Then, the CPS turns out as 4-6. Besides, increased by one, the value of the header pointer gets to be "2". Thus, the instruction held in 5(1) is completed.

### (7-A) Instruction Decode-and-Issue Stage in the 7th cycle

Instruction dup_x1 is decoded and issued. Instruction dup_x1 is a stack instruction to turn state of the word stack from { ....., word1, word2 } (growing toward the right) to { ......, word2, word1, word2 }, which makes a copy of a word of data on the stack. So, free CRF entry 6(8), which has been registered on the FL, is allocated to hold copy data. And, state of the APS is turned from {<7>, <6>} (from bottom up) as 3-6 to {<8>, <7>, <6>} as 3-7.

In CRF entry 6(8), the BB field is altered to "1", and "0" is entered in the WCF field and in the C field.

As the value of the trail pointer is "6", substance of the above instruction is written into IB entry 5(6). At this juncture, address <6> of the CRF entry allocated to hold data to be copied is entered in 1st source field, and address <8> of the CRF entry that is being newly allocated to hold copy data is entered in 1st destination field. Besides, increased by one, the value of the trail pointer gets to be "7".

The same substance of the above instruction that is being written into IB entry 5(6), together with IB entry address "6", is written into RS 811 of ALU1, which has been free.

And, contents of the WCF field and the data field of entry 6(6) of the CRF in state 6-6 are read out. In this case, as the WCF-field content is "0", there is no need of data delivery.

### (7-B) Execution Stage in the 7th cycle

ALU0 has finished execution of the instruction of 5(2), so it puts two words (A+B)_1, (A+B)_2, which constitute the result, on the CDB, together with respective destination CRF entry addresses <4>, <5>. Upon this, those data are respectively written into CRF entries 6(4), 6(5), in each of which the WCF field is altered to "1". And, the data respectively coupled with CRF entry addresses <4>, <5> are written into RS 802 of ALU0, which holds the same substance as in IB entry 5(3), as well.

The LSU puts data of variable T, which was read out of the data buffer, on the CDB, together with destination CRF entry address <7>. Upon this, the data is written into CRF entry 6(7), in which the WCF field is altered to "1".

Thus, execution of the instructions held in IB entries 5(2) and 5(4) are finished normally, so, in the next cycle, the S field of each of 5(2) and 5(4) will be altered to "1", which means normal termination.

### (7-C) Completion Stage in the 7th cycle

In the IB in state 5-6, as the content of the S field is "0" in entry 5(2), which is indicated by the header pointer, no operation of the completion stage is performed.

### (8-A) Instruction Decode-and-Issue Stage in the 8th cycle

Instruction fsub is decoded and issued. As it is an arithmetic instruction to pop two words of source data from the operand stack, operate on them and push a word of result, <7> and <6> are popped from the APS, free CRF entry 6(9), which has been registered on the FL, is allocated to hold the result, and entry address <9> is pushed onto the APS. Then, the APS turns out as 3-8.

In CRF entry 6(9), the BB field is altered to "1", and "0" is entered in the WCF field and in the C field.

As the value of the trail pointer is "7", substance of the above instruction is written into IB entry 5(7). At this juncture, CRF entry addresses <7>, <6>, which are being popped from the APS, are respectively entered in 1st and 2nd source field, and <9>, which is being pushed onto the APS, is entered in 1st destination field. Besides, increased by one, the value of the trail pointer gets to be "8".

The same substance of the above instruction that is being written into IB entry 5(7), together with IB entry address "7", is written into RS 801 of ALU0, which has been free (the latency of operation fsub is supposed to be 2 cycles).

And, contents of the WCF field and the data field of entries 6(7), 6(6) of the CRF in state 6-7 are read out. In this case, as the WCF-field content of 6(7) is "1", entry address <7> and data of variable T will be put on the CDB in the next cycle.

### (8-B) Execution Stage in the 8th cycle

As required source data are fully arranged in RS 802, which holds the substance of instruction d2f, the contents of the RS are conveyed to the executioner part of ALU0 and get to be processed.

### (8-C) Completion Stage in the 8th cycle

In the IB in state 5-7, as the content of the S field is "0" in entry 5(2), which is indicated by the header pointer, no operation of the completion stage is performed.

### (9-A) Instruction Decode-and-Issue Stage in the 9th cycle

Instruction fdiv is decoded and issued. As it is an arithmetic instruction to pop two words of source data from the operand stack, operate on them and push a word of result, <8> and <9> are popped from the APS, free CRF entry 6(10), which has been registered on the FL, is allocated to hold the result, and entry address <10> is pushed onto the APS. Then, the APS turns out as 3-9.

In CRF entry 6(10), the BB field is altered to "1", and "0" is entered in the WCF field and in the C field.

As the value of the trail pointer is "8", substance of the above instruction is written into IB entry 5(8). At this juncture, CRF entry addresses <8>, <9>, which are being popped from the APS, are respectively entered in 1st and 2nd source field, and <10>, which is being pushed onto the APS, is entered in 1st destination field. Besides, increased by one, the value of the trail pointer gets to be "9".

The same substance of the above instruction that is being written into IB entry 5(8), together with IB entry address "8", is written into RS 812 of ALU1, which has been free (the latency of operation fdiv is supposed to be 10 cycles).

And, contents of the WCF field and the data field of entries 6(8), 6(9) of the CRF in state 6-8 are read out. In this case, as each WCF-field content is "0", there is no need of data delivery.

### (9-B) Execution Stage in the 9th cycle

As described in (8-A), entry address <7> and data of variable T are put on the CDB. Upon this, the data coupled with CRF entry address <7> is written into RS 801 of ALU0, which holds the same substance as in IB entry 5(7), as well.

### (9-C) Completion Stage in the 9th cycle

In the IB in state 5-8, as the content of the S field has become "1" in entry 5(2), which is indicated by the header pointer, the CPS and the CRF are manipulated in accordance with the substance of 5(2). Namely, <0>, <1>, <2> and <3> ― the contents of the source fields of IB entry 5(2)― are popped from the CPS, and <4> and <5> ― the contents of the destination fields ― are pushed onto the CPS. Then, the CPS turns out as 4-9. In each of CRF entries 6(0), 6(1), 6(2), 6(3), whose respective addresses are being popped from the CPS, the BB field is altered to "0". CRF entry addresses <0>, <1>, <2>, <3> get to be registered on the FL. Besides, increased by one, the value of the header pointer gets to be "3". Thus, the instruction held in 5(2) is completed.

### (10-A) Instruction Decode-and-Issue Stage in the 10th cycle

Instruction fstore [X] is decoded and issued. As it is an instruction to store a word of data on the top of the stack, <10> is popped from the APS. Then, the APS turns out as 3-10.

As the value of the trail pointer is "9", substance of the above instruction is written into IB entry 5(9). At this juncture, CRF entry address <10>, which is being popped from the APS, is entered in 1st source field. Besides, increased by one, the value of the trail pointer gets to be "10".

The same substance of the above instruction that is being written into IB entry 5(9), together with IB entry address "9", is written into RS 831 of the LSU, which has been free. In the next cycle, the store address corresponding to variable name [X] will be written into the store buffer.

And, contents of the WCF field and the data field of entry 6(10) of the CRF in state 6-9 are read out. In this case, as the WCF-field content is "0", there is no need of data delivery.

### (10-B) Execution Stage in the 10th cycle

ALU0 has finished execution of the instruction of 5(3), so it puts a word of result (A+B) on the CDB, together with destination CRF entry address <6>. Upon this, the data is written into CRF entry 6(6), in which the WCF field is altered to "1". And, the data coupled with CRF entry address <6> is written into RS 811 of ALU1 and RS 801 of ALU0, which respectively hold the same substances as in IB entries 5(6) and 5(7), as well.

Thus, execution of the instruction held in IB entry 5(3) is finished normally, so, in the next cycle, the S field of 5(3) will be altered to "1", which means normal termination.

### (10-C) Completion Stage in the 10th cycle

In the IB in state 5-9, as the content of the S field is "0" in entry 5(3), which is indicated by the header pointer, no operation of the completion stage is performed.

In the following, each item that contains no act to specify is omitted, whether for an execution stage or for a completion stage.

### (11-B) Execution Stage in the 11th cycle

As required source data are fully arranged in RS 801, which holds the substance of instruction fsub, the contents of the RS are conveyed to the executioner part of ALU0 and get to be processed.

As the source data has been written into RS 811, which holds the substance of stack instruction dup_x1, which involves duplication on the stack, that data ― (A+B) ― is put on the CDB, together with address <8> of the CRF entry of the corresponding destination. Upon this, the data is written into CRF entry 6(8), in which the WCF field is altered to "1". And, the data coupled with CRF entry address <8> is written into RS 812 of ALU1, which holds the same substance as in IB entry 5(8), as well.

Thus, execution of the instruction held in IB entry 5(6) is finished normally, so, in the next cycle, the S field of 5(6) will be altered to "1", which means normal termination.

### (12-C) Completion Stage in the 12th cycle

In the IB in state 5-11, as the content of the S field has become "1" in entry 5(3), which is indicated by the header pointer, the CPS and the CRF are manipulated in accordance with the substance of 5(3). Namely, <4> and <5> ― the contents of source fields of IB entry 5(3) ― are popped from the CPS, and <6> ― the content of a destination field ― is pushed onto the CPS. Then, the CPS turns out as 4-12. In each of CRF entries 6(4), 6(5), whose respective addresses are being popped from the CPS, the BB field is altered to "0". CRF entry addresses <4>, <5> get to be registered on the FL. Besides, increased by one, the value of the header pointer gets to be "4". Thus, the instruction held in 5(3) is completed.

### (13-B) Execution Stage in the 13th cycle

ALU0 has finished execution of the instruction of 5(7), so it puts a word of result T-(A+B) on the CDB, together with destination CRF entry address <9>. Upon this, the data is written into CRF entry 6(9), in which the WCF field is altered to "1". And, the data coupled with CRF entry address <9> is written into RS 812 of ALU1, which holds the same substance as in IB entry 5(8), as well.

Thus, execution of the instruction held in IB entry 5(7) is finished normally, so, in the next cycle, the S field of 5(7) will be altered to "1", which means normal termination.

### (13-C) Completion Stage in the 13th cycle

In the IB in state 5-12, as the content of the S field is "1" in entry 5(4), which is indicated by the header pointer, the CPS (and the CRF) is/are manipulated in accordance with the substance of 5(4). Namely, <7> ― the content of a destination field of IB entry 5(4) ― is pushed onto the CPS. Then, the CPS turns out as 4-13. Besides, increased by one, the value of the header pointer gets to be "5". Thus, the instruction held in 5(4) is completed.

### (14-B) Execution Stage in the 14th cycle

As required source data are fully arranged in RS 812, which holds the substance of instruction fdiv, the contents of the RS are conveyed to the executioner part of ALU1 and get to be processed.

### (14-C) Completion Stage in the 14th cycle

In the IB in state 5-13, as the content of the S field is "1" in entry 5(5), which is indicated by the header pointer, the CPS (and the CRF) is/are manipulated in accordance with the substance of 5(5). Namely, the act of the APS described in (6-A) is reproduced, then the CPS turns out as 4-14. Besides, increased by one, the value of the header pointer gets to be "6". Thus, the instruction held in 5(5) is completed.

### (15-C) Completion Stage in the 15th cycle

In the IB in state 5-14, as the content of the S field is "1" in entry 5(6), which is indicated by the header pointer, the CPS (and the CRF) is/are manipulated in accordance with the substance of 5(6). Namely, the act of the APS described in (7-A) is reproduced, then the CPS turns out as 4-15. Besides, increased by one, the value of the header pointer gets to be "7". Thus, the instruction held in 5(6) is completed.

### (16-C) Completion Stage in the 16th cycle

In the IB in state 5-15, as the content of the S field is "1" in entry 5(7), which is indicated by the header pointer, the CPS and the CRF are manipulated in accordance with the substance of 5(7). Namely, <7> and <6> ― the contents of source fields of IB entry 5(7) ― are popped from the CPS, and <9> ― the content of a destination field ― is pushed onto the CPS. Then, the CPS turns out as 4-16. In each of CRF entries 6(7), 6(6), whose respective addresses are being popped from the CPS, the BB field is altered to "0". CRF entry addresses <7>, <6> get to be registered on the FL. Besides, increased by one, the value of the header pointer gets to be "8". Thus, the instruction held in 5(7) is completed.

### (24-B) Execution Stage in the 24th cycle

ALU1 has finished execution of the instruction of 5(8), so it puts a word of result (A+B)/{T-(A+B)} on the CDB, together with destination CRF entry address <10>. Upon this, the data is written into CRF entry 6(10), in which the WCF field is altered to "1". And, the data coupled with CRF entry address <10> is written into RS 831 of the LSU, which holds the same substance as in IB entry 5(9), as well.

Thus, execution of the instruction held in IB entry 5(8) is finished normally, so, in the next cycle, the S field of 5(8) will be altered to "1", which means normal termination.

### (25-B) Execution Stage in the 25th cycle

As the store data has been written in RS 831, which holds the substance of store instruction fstore, this data is written into the store buffer.

Thus, in regard to the store instruction held in IB entry 5(9), both the store address and the store data get to be arranged in the store buffer, so, in the next cycle, the S field of 5(9) will be altered to "1 which means store executable.

### (26-C) Completion Stage in the 26th cycle

In the IB in state 5-25, as the content of the S field has become "1" in entry 5(8), which is indicated by the header pointer, the CPS and the CRF are manipulated in accordance with the substance of 5(8). Namely, <8> and <9> ― the contents of source fields of IB entry 5(8) ― are popped from the CPS, and <10> ― the content of a destination field ― is pushed onto the CPS. Then, the CPS turns out as 4-26. In each of CRF entries 6(8), 6(9), whose respective addresses are being popped from the CPS, the BB field is altered to "0". CRF entry addresses <8>, <9> get to be registered on the FL. Besides, increased by one, the value of the header pointer gets to be "9". Thus, the instruction held in 5(8) is completed.

### (27-C) Completion Stage in the 27th cycle

In the IB in state 5-26, a store instruction is held and the content of the S field has become "1" in entry 5(9), which is indicated by the header pointer, so the system requests the LSU to perform the store into the data buffer. And, the CPS and the CRF are manipulated in accordance with the substance of 5(9). Namely, <10> ― the content of a source field of IB entry 5(9) ― is popped from the CPS. Then, the CPS turns out as 4-27. In CRF entry 6(10), whose address is being popped from the CPS, the BB field is altered to "0". CRF entry address <10> gets to be registered on the FL. Besides, increased by one, the value of the header pointer gets to be "10". Thus, the instruction held in 5(9) is completed.

Now, computation of X=(A+B)/{T-(A+B)} is concluded in the computer system of this embodiment.

Speculative execution based on branch prediction can be incarnated in the computer system of the present invention. Furnishing with an APS history file is for incarnation of speculative execution. Each time a conditional branch instruction is decoded, contents of all the APS entries and PP_OF_APS are written into an entry of the APS history file. In the following, how speculative execution based on branch prediction goes on in the computer system of this embodiment is described.

As stated above, in the instruction decode-and-issue stage, the computer system of this embodiment is to decode an instruction, manipulate the APS and the CRF in accordance with the instruction, and write substance of the instruction into the IB, and if necessary, into a free RS of an appropriate functional unit. From in the initialized state, after which instructions start to flow, and till the first conditional branch instruction is decoded, in regard to each issued instruction, attached branch tag "0" is written into the BT field of the IB entry (and the RS of the functional unit) into which substance of the instruction is being written, and into the C field of each allocated CRF entry.

When the first conditional branch instruction is decoded and branch prediction is conducted, to preserve the state at the branch point, contents of all the APS entries and PP_OF_APS are written into the entry of address 0 of the APS history file. In the course of the instruction sequence grounded on the above branch prediction, with "1" attached as branch tag, the IB (, RSs of the functional units) and the CRF are set.

When the second conditional branch instruction is decoded, in either the case that the first conditional branch instruction is unsettled or the case that it has been settled and the prediction proved right, contents of all the APS entries and PP_OF_APS are written into the entry of address 1 of the APS history file. In the course of the instruction sequence grounded on the second branch prediction, with "2" attached as branch tag, the IB (, RSs of the functional units) and the CRF are set.

If branch prediction continues to make a hit, the process goes on in the same manner, and writing into the APS history file is carried out in the order of address. Besides, after writing into the entry of address n of the APS history file, and till the next writing, as branch tag, n+1 is attached to each issued instruction.

In the case that a branch prediction turns out to have missed, among instructions being executed by functional units or retained in RSs, each instruction that is identified as issued after the conditional branch instruction by its attached branch tag is canceled; as for the CRF, the branch tag is checked in each C field, and each matched CRF entry is released from allocation (the BB field is altered to "0", and the entry address gets to be registered on the FL); and as for the IB, the entries enqueued after the conditional branch instruction are dequeued (the value of the trail pointer is altered to the address of the entry next to that holding the conditional branch instruction). And moreover, in each APS entry whose content is not identical with that of the CPS entry of the same address and in PP_OF_APS, the content is altered to the corresponding content in the APS history file that was written when the conditional branch instruction was decoded, and the decode-and-issue process is resumed from the instruction at the right place.

As above, in the computer system of the present invention, as the state at each point when a conditional branch instruction is decoded and branch prediction is conducted can be reconstructed by utilizing the APS history file, speculative execution based on branch prediction is feasible.

The above is described on the assumption that at most one instruction can be decoded and issued / completed per cycle for the sake of simplicity. The computer system of the present invention can be so structured as to be able to decode and issue / complete a plurality of instructions simultaneously. Namely, if the FL is constructed as a FIFO queue, the order in which addresses of free CRF entries are taken out of the FL for allocation is established. So, the system can decode and issue a plurality of instructions simultaneously by grasping substance of stack operations, i.e. how many words to be popped/pushed for each instruction. Besides, the system can also be so structured as to be able to complete a plurality of instructions simultaneously, because, basically, in completing an instruction, the system is to manipulate the CPS, in accordance with the substance held in IB, so as to reproduce the operation that was applied on the APS in the course of decode-and-issue of the instruction, and release each CRF entry whose address is popped from the CPS.

The more the number of instructions that the system is structured to be able to decode and issue / complete simultaneously, the more complicated control circuits of the instruction decode-and-issue unit, etc. become, and the more amount of hardware is required in respect to the number of ports of each of the register files that constitute the APS, the CPS, the IB, the CRF, the data buffer, etc., the number of ALUs, the number of buses that comprise the CDB, and so forth.

The computer system of the present invention can be so structured that, right before the instruction decode-and-issue stage, substances of a plurality of instructions that are to be simultaneously decoded and issued are converted into an integrated form. Or, the system can be so structured that converted codes are stored in the instruction cache.

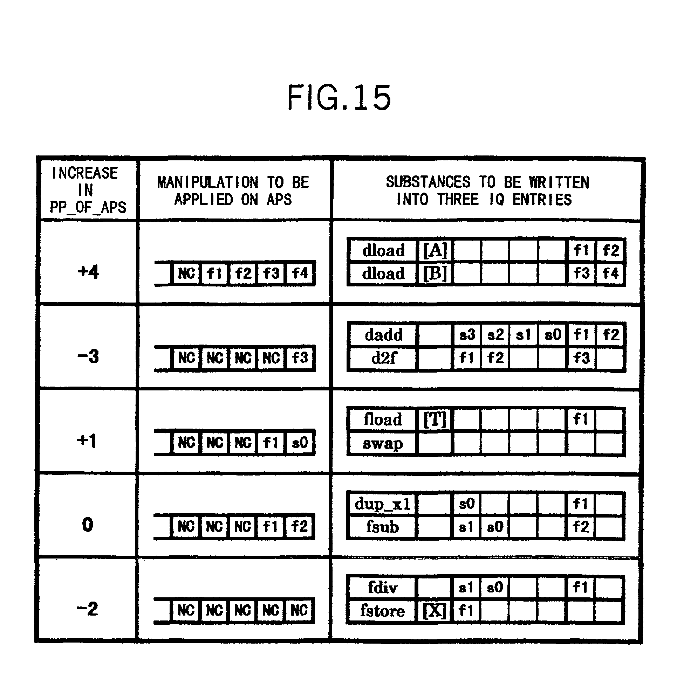

For example, in the case that the system is so structured as to be able to decode and issue up to two instructions per cycle, the above-mentioned program to compute X=(A+B)/{T-(A+B)} is converted into such a form as diagrammed in Fig. 15. Grounded on two instructions to be decoded and issued simultaneously, increase in PP_OF_APS, manipulation to be applied on the APS, and substances to be written into two IB entries are shown in each row of the diagram of Fig. 15. Here, the contents of the APS just before issuing instructions are denoted as { ...... s2, s1, s0 } (the right end is the top of the stack), and the contents of the free list, which is constructed as a FIFO queue, are denoted as {f1, f2, f3, .....} (in the order in which they are to be taken out). When issuing instructions, each of above identifiers ― f1, f2, f3, ... ; s0, s1, s2, ... ― is to be replaced by the corresponding CRF entry address. The top of stack APS is to shift as indicated in the column of increase in PP_OF_APS, while, in the column of manipulation to be applied on the APS, the right end is to correspond to the top of the stack after the shift. And, NC stands for No Change.

Computer systems according to the present invention are not confined to the above embodiment. There may be various embodiments with different detailed structures. For example, the following could be listed.
1. A system furnished with a CRF, a free list and a set of functional units for each data type: integer / floating point, 32bit/64bit or the like.
2. A system furnished with a plurality of sets each comprising an advanced pointer stack and a completed pointer stack, that is so structured as to change sets in a method invocation/return.
3. A system furnished with a plurality of sets each comprising an advanced pointer stack, a completed pointer stack, an instruction buffer and a data buffer, that is so structured as to process a plurality of threads in parallel.

Besides, many of the variations such as those conceivable for the register-based superscalar architecture can be applied to the computer system based on the present invention.

A computer system based on the present invention whose instruction set comprises both stack-type instructions and register-type instructions can be incarnated as well. Namely, such a system may be furnished with an advanced register-mapping table and a completed register-mapping table, each entry of which, being provided for the corresponding logical register, is designed to hold an entry address in the consolidated register file, as well as an advanced pointer stack and a completed pointer stack. And, it may be so structured as to manipulate the advanced/completed pointer stack for stack-type instructions, and access the advanced/completed register-mapping table for register-type instructions. In this case, instead of an advanced pointer stack history file, an advanced history file, each entry of which is designed to hold both contents of the advanced pointer stack and contents of the advanced register-mapping table, needs to be provided.

### INDUSTRIAL UTILITY

As above, the computer system of the present invention, while securing precise handling of exceptions, executes programs described in a machine language based on the stack architecture in an out-of-order manner. The system has the advantage of the capability of efficient processing by virtue of parallel operation of a plurality of functional units, pipelining of functional units or the like.

Furthermore, since the system can be so structured as to have the capability of speculative execution based on branch prediction and/or as to be able to decode and issue / complete a plurality of instructions per cycle, still higher performance can be attained.

## Claims

1. A computer system for executing programs described in a machine language based on the stack architecture, comprising:
a data cache;
a data buffer that can hold data of variables;
a consolidated register file each entry of which is designed to hold data;
an advanced pointer stack each entry of which is designed to hold an entry address in said consolidated register file;
an instruction buffer having the construction of a FIFO queue each entry of which is designed to hold substance of an instruction;
an arithmetic/logic unit that is designed to execute arithmetic/logic operations; and
a load/store unit that can access said data cache and said data buffer;
wherein, in the case that an instruction including a pop operation from the operand stack is decoded, entry addresses in said consolidated register file, to the number of words to be popped, are popped from said advanced pointer stack;
in the case that an instruction including a push operation onto the operand stack is decoded, entries of said consolidated register file that have not been allocated are allocated, to the number of words to be pushed, and the addresses of said newly allocated entries of said consolidated register file are pushed onto said advanced pointer stack;
substance of each decoded instruction, together with the popped / pushed entry addresses in said consolidated register file in the case that the instruction includes a pop / push operation, is written into said instruction buffer; and
unexecuted instructions held in said instruction buffer are to be executed on the principle of data drive.

2. The computer system according to claim 1, further comprising a completed pointer stack each entry of which is designed to hold an entry address in said consolidated register file;
wherein, when the instruction held in the head entry of said instruction buffer is/becomes ready to be completed, in accordance with the substance in said head entry of said instruction buffer, said completed pointer stack is manipulated so as to reproduce the operation that was applied on said advanced pointer stack in the course of decoding of said instruction, said head entry is dequeued; and
each entry of said consolidated register file whose address said completed pointer stack loses hold of on account of a pop operation is released from allocation.

3. The computer system according to claim 2, further comprising a free list that is designed to hold addresses of free entries of said consolidated register file;
wherein, in the initialized state, the addresses of all the entries of said consolidated register file are registered on said free list;
in the case that an entry of said consolidated register file needs to be allocated, an address of free entry of said consolidated register file is taken out of said free list; and
the address of each entry of said consolidated register file that is released from allocation is to be registered on said free list.

4. The computer system according to claim 2, further comprising an advanced pointer stack history file each entry of which is designed to hold contents of said advanced pointer stack;
each entry of said consolidated register file being designed to further hold a branch tag;
wherein, in decoding an instruction, a branch tag is written into each entry of said consolidated register file that is being allocated;
each time a conditional branch instruction is decoded, contents of said advanced pointer stack are written into an entry of said advanced pointer stack history file, and then, with an updated branch tag, speculative execution based on branch prediction is carried out; and
in the case that a branch prediction turns out to have missed, instructions decoded after the conditional branch instruction are invalidated, each entry of said consolidated register file in which a branch tag for instructions decoded after said conditional branch instruction is written is released from allocation, contents of said advanced pointer stack history file that were written when said conditional branch instruction was decoded are copied into said advanced pointer stack, and the process is resumed from the instruction at the right place.

5. The computer system according to claim 2,
said advanced pointer stack and said completed pointer stack being each constructed as a circular buffer;
wherein, in the case that the content of the bottom entry holding an entry address in said consolidated register file is identical between said advanced pointer stack and said completed pointer stack, the data held in the entry of said consolidated register file indicated by said identical content can be spilt into said data buffer, with the hold of the entry address in said consolidated register file in said bottom entry removed both in said advanced pointer stack and in said completed pointer stack; and
said consolidated register file can be filled with data from said data buffer by allocating a free entry of said consolidated register file to said data, writing said data into said entry, and having the entry under the bottom entry holding an entry address in said consolidated register file hold the address of said entry of said consolidated register file into which said data is being written both in said advanced pointer stack and in said completed pointer stack.

6. The computer system according to claim 3,
said free list being constructed as a FIFO queue;
wherein, in accordance with a plurality of instructions decoded simultaneously, manipulation of said advanced pointer stack, allocation of entries of said consolidated register file, and writing of substances of said plurality of instructions into successive entries of said instruction buffer are to be conducted at a time; and
in accordance with substances held in a plurality of successive entries of said instruction buffer, manipulation of said completed pointer stack, and release of entries of said consolidated register file from allocation are to be conducted at a time.

7. A computer system for executing programs described in a machine language based on the stack architecture, comprising:
a consolidated register file each entry of which is designed to hold data;
an advanced pointer stack each entry of which is designed to hold an entry address in said consolidated register file;
an instruction buffer having the construction of a FIFO queue each entry of which is designed to hold substance of an instruction;
functional units each having an appropriate number of reservation stations; and
a common data bus through which data and their respective entry addresses in said consolidated register file are to be distributed among said consolidated register file and said functional units;
wherein, in the case that an instruction including a pop operation from the operand stack is decoded, entry addresses in said consolidated register file, to the number of words to be popped, are popped from said advanced pointer stack;
in the case that an instruction including a push operation onto the operand stack is decoded, entries of said consolidated register file that have not been allocated are allocated, to the number of words to be pushed, and the addresses of said newly allocated entries of said consolidated register file are pushed onto said advanced pointer stack;
substance of each decoded instruction, together with the popped / pushed entry addresses in said consolidated register file in the case that the instruction includes a pop / push operation, is written into said instruction buffer;
substance of each instruction that is written into said instruction buffer is written into a free reservation station of a functional unit that is to execute the instruction, if necessary according to the type of the instruction;
the contents of each entry of said consolidated register file whose address is popped from said advanced pointer stack are read out, and if data is already written, the entry address and the data are to be put on said common data bus;
in each of said reservation stations holding substance of an instruction, each address of entry of said consolidated register file to hold source data is compared with entry addresses in said consolidated register file delivered through said common data bus, data is taken in if any matched, and said instruction is to be performed after required source data are fully arranged;
each of said functional units is to put, on said common data bus, each result data produced by executing an instruction that pushes an entry address in said consolidated register file onto said advanced pointer stack when decoded, together with the pushed entry address in said consolidated register file; and
in accordance with contents delivered through said common data bus, data are written in said consolidated register file.

8. The computer system according to claim 7, further comprising a completed pointer stack each entry of which is designed to hold an entry address in said consolidated register file;
wherein, when the instruction held in the head entry of the queue of said instruction buffer is/becomes ready to be completed, in accordance with the substance in said head entry of said queue, said completed pointer stack is manipulated so as to reproduce the operation that was applied on said advanced pointer stack in the course of decoding of said instruction, said head entry is dequeued; and
each entry of said consolidated register file whose address said completed pointer stack loses hold of on account of a pop operation is released from allocation.
